# FASCICULE DE BREVET EUROPEEN

(11) **EP 4 491 385 B1**
(45) Date de publication et mention de la délivrance du brevet: **25.02.2026**
(21) Numéro de dépôt: 24187219.1
(22) Date de dépôt: 08.07.2024
(51) Int. Cl.: B32B 5/02, B32B 7/12, B32B 27/08, B32B 27/12, B32B 27/22, B32B 27/30, B32B 5/18

(54) **STRUCTURE MULTICOUCHE POUR LA REALISATION D'UN REVETEMENT DE SOL RENFORCE ET RECYCLABLE**
MEHRSCHICHTIGE STRUKTUR ZUR HERSTELLUNG EINER VERSTÄRKTEN UND WIEDERVERWERTBAREN BODENABDECKUNG
MULTILAYER STRUCTURE FOR PRODUCING A REINFORCED AND RECYCLABLE FLOOR COVERING

(30) Priorité: 11.07.2023 FR 2307451
(43) Date de publication de la demande: 15.01.2025
(73) Titulaire: GERFLOR, 69009 Lyon (FR)
(72) Inventeur: JAUDOUIN, Olivier, 69009 LYON (FR); CINAUSERO, Nicolas, 69009 LYON (FR)
(74) Mandataire: Ipsilon

(56) Documents cités:
- EP-A1- 3 530 451
- FR-A1- 3 091 831
- FR-A1- 3 112 096

## Description

### Domaine technique

L'invention se rapporte au domaine technique des revêtements de sol souple, présentés de préférence en rouleau ou sous forme de kit soudé et adhésivé.

L'invention concerne une structure multicouche pour la réalisation d'un revêtement de sol renforcé et recyclable.

L'invention trouve une application avantageuse pour revêtir les panneaux de planchers d'avion alvéolés par exemple.

### Art antérieur

Il est bien connu de l'art antérieur une structure multicouche pour la réalisation d'un revêtement de sol, comprenant une couche de surface liée à une couche d'envers dite « laminée » utilisée pour revêtir les planchers d'avion par exemple.

Dans ce type de structure, la couche d'envers laminée est constituée d'un renfort tissé en fibres de verre imprégné de résines phénoliques ou polyester. Cette couche d'envers permet d'assurer une tenue du revêtement de sol sur son support, de lui apporter de la stabilité dimensionnelle, de bloquer la migration des plastifiants provenant des couches de surface en PVC, d'améliorer la résistance à l'impact du revêtement de sol et de permet de réduire le phénomène de « télégraphing », qui se traduit par la transmission des irrégularités du support sur le revêtement de sol. Un autre aspect important d'un revêtement de sol utilisé pour revêtir les planchers d'avion est sa capacité à résister aux déformations du plancher en vol pouvant faire apparaître des plis, également appelée « buckling ».

La couche d'envers laminée est complexe à fabriquer et nécessite une certaine maîtrise technique, dont un nombre restreint de sociétés possède les compétences, ce qui implique un coût de réalisation élevé.

Un autre inconvénient de cette couche d'envers laminée et qu'elle n'est pas recyclable du fait de l'utilisation de résine phénolique. A ce jour, ce type de couche est plutôt broyé et mis au rebut.

Il est connu les documents US2010/0227132 et EP3064347 qui décrivent des structures multicouches pour la réalisation de revêtements de sol dans lesquelles une couche d'envers est composée d'un matériau composite comprenant des fibres de renfort tissées ou non tissées et d'une résine polymère thermodurcissable ou thermoplastique, choisie dans le groupe comprenant la résine polyester ; la résine phénolique ; la résine époxy ; le polysulfone ; la résine vinylester ; la résine époxy-acrylique ; et leurs mélanges.

L'inconvénient qui en résulte est que l'utilisation d'une résine thermodurcissable affecte la recyclabilité du revêtement de sol.

Remplacer la résine phénolique par une résine thermoplastique peut affecter également la recyclabilité, car la structure devient trop hétérogène. Au surplus les performances attendues de la structure multicouche ne sont pas atteintes, telle que la soudabilité entre deux structures ou la résistance au trafic par exemple.

FR 3 112 096 A1 divulgue une structure multicouche pour la réalisation d'un revêtement de sol, comprenant au moins une couche de surface (C) liée à une couche d'envers (A), la couche de surface (C) et la couche d'envers (A) étant réalisées à partir de PVC; caractérisée en ce que la structure multicouche comprend une masse surfacique comprise entre 1500 et 3300 g/m² et une couche dite de décor (B) comprenant une armature tissée liée à la couche de surface (C) et à la couche d'envers (A) par l'intermédiaire de couches de liaison sous la forme de films thermo-fusibles ou copolyester; et en ce que la couche d'envers (A) réalisée à partir de PVC comprend une épaisseur comprise entre 0.1 et 5 mm, et de 12 à 18 PCR de plastifiant.

### Exposé de l'invention

L'un des buts de l'invention est donc de pallier les inconvénients de l'art antérieur en proposant une structure multicouche, par exemple utilisée pour revêtir les planchers d'avion, présentant une couche d'envers dont le coût de fabrication est faible par rapport à celui des couches laminées, et de fournir une structure multicouche donnant entière satisfaction en termes de tenue du revêtement sur son support, de stabilité dimensionnelle, de résistance à l'impact du revêtement de sol.

Un autre objectif de l'invention est de fournir une telle structure multicouche dont la recyclabilité est améliorée et le poids limité.

Un autre objectif de l'invention est de fournir une telle structure multicouche dont la résistance au télégraphing ainsi qu'au buckling sont comparables voire meilleures que les solutions existantes.

À cet effet il a été mis au point une structure multicouche pour la réalisation d'un revêtement de sol, comprenant au moins une couche de surface liée à une couche d'envers, la couche de surface et la couche d'envers étant réalisées à partir de PVC.

Selon l'invention, la structure multicouche comprend successivement et du haut vers le bas, entre la couche de surface et la couche d'envers, une première armature tissée, une couche intermédiaire et une seconde armature tissée, liées entre elles, à la couche de surface et à la couche d'envers par l'intermédiaire de couches de liaison sous la forme de films thermofusibles par exemple en copolyamide ou copolyester, ou de couches de colle polyuréthane réticulée, la structure multicouche comprend une masse surfacique comprise entre 2000 et 3000 g/m², et la couche intermédiaire et la couche d'envers sont réalisées à partir de PVC et comprennent chacune :
- une épaisseur comprise entre 100 µm et 200 µm ;
- entre 5 et 25 PCR de plastifiant, préférentiellement entre 6 et 15 PCR de plastifiants.

Les armatures tissées améliorent la rigidité et la stabilité dimensionnelle de la structure multicouche.

La quantité de plastifiant est directement liée à la quantité d'ignifugeant nécessaire dans la composition puisque les plastifiants sont des composés inflammables. Limiter ainsi la quantité de plastifiant entre 5 et 25 PCR, permet de limiter la quantité d'ignifugeant voire de ne pas en intégrer dans la composition, de limiter la migration des plastifiants dans les adhésifs double faces généralement utilisés pour lier la structure multicouche à un plancher alvéolé d'un avion par exemple, et par conséquent permet d'éviter de dégrader les propriétés d'adhérence de ces adhésifs au cours du temps. Une quantité de plastifiants dans les couches intermédiaire et d'envers comprise entre 6 et 15 PCR permet d'obtenir un meilleur compromis entre la rigidité de la structure, son poids et sa maniabilité pour faciliter sa pose.

La structure multicouche selon l'invention présente ainsi une couche intermédiaire et d'envers, permettant d'obtenir un revêtement de sol dont le coût de fabrication est relativement faible, et qui donne entière satisfaction en termes de tenue du revêtement sur son support, de stabilité dimensionnelle, d'incurvation à la chaleur et de résistance à l'impact. Étant donné que la couche de surface, la couche intermédiaire et la couche d'envers sont toutes réalisées à partir de PVC, la recyclabilité de la structure multicouche devient envisageable.

De préférence, la couche d'envers et/ou la couche intermédiaire sont réalisées à partir de PVC et présentent une résistance à la flexion, mesurée selon la norme ISO 2493-2, comprise entre 0,3 mN.m et 1,5 mN.m afin de limiter les effets de télégraphing et d'apporter une rigidité suffisante à la structure.

Selon une forme de réalisation particulière, la couche de surface comprend une couche supérieure, notamment d'usure, et une ou plusieurs couches intercalaires en PVC plastifié.

Par exemple, la couche supérieure est transparente, et une première couche intercalaire est directement disposée sous la couche de surface et se présente par exemple sous la forme d'un film imprimé d'un décor. Dans ce dernier cas, une seconde couche intercalaire, non transparente, est de préférence disposée sous le film imprimé pour assurer une opacité suffisante.

Les couches de surface, intercalaire, intermédiaire et d'envers sont de préférence réalisées par calandrage, pressage, enduction ou extrusion de manière à former une couche relativement lisse dont la composition est homogène dans l'épaisseur.

Selon une forme de réalisation particulière, la première et/ ou la seconde armature tissée peuvent être imprégnées d'un polymère thermoplastique ou thermodurcissable dans une quantité comprise entre 1 % et 10 % en poids de chaque armature tissée imprégnée pour ne pas dégrader la recyclabilité. Ceci permet à la structure multicouche de présenter une plus grande rigidité. Le polymère thermoplastique ou thermodurcissable peut être choisi dans le groupe comprenant la résine polyuréthane, la résine polyester, la résine phénolique, la résine époxy, le polysulfone, la résine vinylester, la résine époxy-acrylique, et leurs mélanges.

De préférence et pour améliorer la résistance au phénomène connue de l'homme du métier sous le terme anglais « telegraphing », une couche moussée, préférentiellement réalisée à partir de PVC, est liée à une face inférieure de la couche d'envers par l'intermédiaire d'une couche de liaison sous forme d'une couche de polyuréthane réticulé (PUR), d'une couche de copolyester thermoplastique (CoPES), de copolyamide ou de polyuréthane thermoplastique (TPU).

Cette couche moussée présente avantageusement une densité comprise entre 0,15 et 0,25, préférentiellement entre 0,20 et 0,25, et une épaisseur comprise entre 1,5 et 3 mm, préférentiellement entre 1,9 et 2,5 mm, afin d'apporter une bonne résistance au télégraphing sans toutefois réduire la résistance à l'indentation de la structure multicouche.

De façon avantageuse, cette couche moussée comprend une troisième armature de renfort imprégnée au moins en partie dans son épaisseur de manière à améliorer la résistance de la couche moussée et de l'ensemble de la structure multicouche. La troisième armature de renfort au moins en partie imprégnée dans l'épaisseur de la couche moussée peut être une couche de textile non-tissé, préférentiellement une voile de fibres de verre ou de polyester, une grille de renfort, préférentiellement une grille de fibres de verre ou de polyester, voire un complexe comprenant une couche de textile non-tissé lié à une grille de renfort.

De façon avantageuse, cette couche moussée comprend une quatrième armature de renfort imprégnée au moins en partie dans son épaisseur de manière à améliorer la résistance au télégraphing de l'ensemble de la structure multicouche. La quatrième armature de renfort au moins en partie imprégnée dans l'épaisseur de la couche moussée peut être une couche de textile non-tissé, préférentiellement une voile de fibres de verre ou de polyester, voire un complexe comprenant une couche de textile non-tissé lié à une grille de renfort, préférentiellement une grille de fibres de verre ou de polyester. La quatrième armature de renfort présente avantageusement une face inférieure destinée à être liée au support tel que le plancher d'un avion. Alternativement, la quatrième armature de renfort présente avantageusement une face inférieure liée à un adhésif double face de manière à pouvoir lier la structure multicouche à un support tel que le plancher d'un avion.

Avantageusement, et pour faciliter la pose de la structure multicouche selon l'invention, la structure multicouche comprend sur une face inférieure destinée à être en regard du sol, c'est-à-dire directement sur la face inférieure de la couche d'envers, une couche d'adhésif repositionnable, c'est-à-dire qui présente un pouvoir d'adhérence à la structure multicouche supérieure au pouvoir d'adhérence au sol pour pouvoir décoller et repositionner la structure multicouche.

### Brève description des dessins

[Fig. 1] illustre en coupe une structure multicouche selon un premier mode de réalisation de l'invention, avec une couche supérieure, une couche intercalaire, une première armature tissée, une couche intermédiaire, une seconde armature tissée et une couche d'envers.
[Fig. 2] est une vue similaire à celle de la figure 1, avec deux couches intercalaires.
[Fig. 3] est une vue similaire à celle de la figure 1, avec en plus une couche moussée sur la face inférieure de la couche d'envers comprenant une troisième armature de renfort imprégnée au moins en partie dans son épaisseur.
[Fig. 4] est une vue similaire à celle de la figure 1, avec en plus une couche moussée sur la face inférieure de la couche d'envers et un adhésif repositionnable en regard du sol.
[Fig. 5] est une vue similaire à celle de la figure 3, avec en plus une quatrième armature de renfort sur la face inférieure de la couche moussée et optionnellement un adhésif repositionnable en regard du sol.

### Description détaillée de l'invention

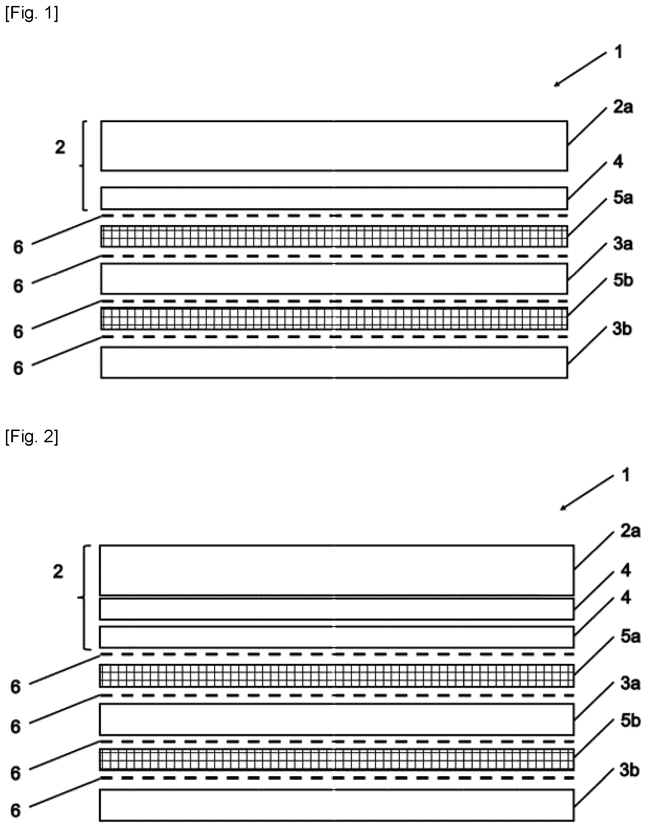

En référence aux figures 1 à 4, l'invention concerne une structure multicouche (1) pour la réalisation d'un revêtement de sol, de préférence pour recouvrir des planchers d'avion, par exemple alvéolés, sans que cela ne soit limitatif.

La structure multicouche (1) selon l'invention présente un coût de fabrication faible, tout en possédant des performances optimales, c'est-à-dire en termes de tenue du revêtement sur son support, de stabilité dimensionnelle, de résistance à l'impact du revêtement de sol, de recyclabilité.

À cet effet, la structure multicouche (1) selon l'invention comprend au moins une couche de surface (2) réalisée à partir de PVC, liée à une couche d'envers (3b), elle aussi réalisée à partir de PVC.

Selon l'invention, la structure multicouche (1) comprend une masse surfacique comprise entre 2000 et 3000 g/m², de préférence entre 2100 et 2600 g/m², et successivement et du haut vers le bas, entre la couche de surface (2) et la couche d'envers (3b), une première armature tissée (5a), une couche intermédiaire (3a), une seconde armature tissée (5b), liées entre elles, à la couche de surface (2) et à la couche d'envers (3b) par l'intermédiaire de couches de liaison (6) sous la forme de films thermofusibles par exemple en copolyamide, en polyuréthane thermoplastique, ou copolyester, ou de couches de colle polyuréthane réticulée.

La couche intermédiaire (3a) et la couche d'envers (3b) sont chacune réalisées à partir de PVC et comprennent :
- une épaisseur comprise entre 100 µm et 200 µm ;
- entre 5 et 25 PCR de plastifiant, préférentiellement entre 6 et 15 PCR de plastifiants, « PCR » signifiant part(s) pour cent de résine, le terme « résine » se rapportant au PVC de la couche intermédiaire (3a) et d'envers (3b) ;
- de préférence une résistance à la flexion, notamment la flexion B des films PVC mesurée selon la norme ISO 2493-2 sur un banc d'essai « Taber Stiffness » de la société « Taber Industries », modèle « TABER 150-E », comprise entre 0,30 mN.m et 1,5 mN.m.

Une couche de liaison (6) présente généralement une épaisseur comprise entre 10 et 100 µm, préférentiellement entre 10 et 50 µm.

Chaque couche intermédiaire et/ou d'envers peut ne pas contenir de charges ou éventuellement comprendre une quantité de charges comprises entre 1 et 50 PCR. Les charges peuvent être choisies dans le groupe comprenant le carbonate de calcium, les craies, le kaolin, le talc, la silice. Chaque couche intermédiaire et/ou d'envers peut en outre contenir au moins un additif choisi dans le groupe suivant : stabilisants thermiques, agents dessicants, lubrifiants, agents de mise en oeuvre (« processing aids »), pigments, ignifugeants.

Une quantité limitée de plastifiant permet de limiter la migration des plastifiants dans les adhésifs double-face qui sont généralement utilisés pour lier la structure multicouche (1) à un sol, de sorte à éviter de dégrader les propriétés d'adhérence desdits adhésifs au cours du temps.

La résistance à la flexion est testée selon le sens machine, la résistance à la flexion est déterminée comme étant le moment de flexion moyen de 10 valeurs mesurées, à savoir 5 mouvements de flexion dans un sens et 5 mouvements de flexion dans un sens opposé.

La structure multicouche (1) obtenue présente ainsi un poids faible permettant de limiter son impact sur la consommation en carburant d'un véhicule l'embarquant, tout en répondant aux contraintes mécaniques de ce type d'application, notamment en termes de résistance au télégraphing et buckling.

La couche de surface (2) peut comprendre une couche supérieure (2a), notamment d'usure, et une, voir figure 1, ou plusieurs, voir figure 2, couches intercalaires (4) en PVC plastifié, par exemple avec une quantité de plastifiant supérieure à 15 PCR, préférentiellement inférieure à 40 PCR. Chaque couche intercalaire peut ne pas contenir de charges ou éventuellement comprendre une quantité de charges comprises entre 1 et 150 PCR. Les charges peuvent être choisies dans le groupe comprenant le carbonate de calcium, les craies, le kaolin, le talc, la silice. Chaque couche intercalaire peut en outre contenir au moins un additif choisi dans le groupe suivant : stabilisants thermiques, agents dessicants, lubrifiants, agents de mise en oeuvre (« processing aids »), pigments, ignifugeants.

La couche supérieure (2a) et les couches intercalaires (4) sont rendues solidaires par exemple par complexage, c'est-à-dire par lamination à chaud. Par exemple, la couche supérieure (2a) présente de préférence une épaisseur comprise entre 0,35mm et 0,55mm, et la ou les couches intercalaires (4) présente chacune de préférence une épaisseur comprise entre 0,15 mm et 0,60 mm.

La couche supérieure (2a) est plastifiée et éventuellement chargée, et peut éventuellement présenter un vernis de surface bien connu de l'homme du métier, pour assurer une facilité d'entretien. Elle peut en outre contenir au moins un additif choisi dans le groupe suivant : stabilisants thermiques UV, agents dessicants, lubrifiants, agents de mise en oeuvre (« processing aids »), pigments, ignifugeants.

Selon une forme de réalisation particulière, la couche supérieure (2a) est transparente à la lumière du domaine du visible pour l'œil humain et la couche intercalaire (4), directement disposée sous la couche supérieure (2a), peut se présenter par exemple sous la forme d'un film imprimé d'un décor sur sa face en regard de la couche supérieure (2a). Dans ce dernier cas, il est préférable de disposer une deuxième couche intercalaire (4), non transparente, qui est positionnée sous le film imprimé pour assurer une opacité suffisante au décor et éviter de voir la structure de la première armature tissée (5a). Alternativement, un décor peut être directement imprimé en envers de la couche supérieure, au regard de la couche intercalaire (4).

La première et la seconde armature tissées (5a, 5b) permettent d'améliorer la rigidité et la stabilité dimensionnelle de la structure multicouche (1), et se présentent par exemple sous la forme d'un tissu de verre.

Du fait de l'absence d'affinité des armatures tissées (5a, 5b) avec le PVC, lesdites armatures tissées (5a, 5b) sont liées à la couche de surface (2) , à la couche intermédiaire (3a) et à la couche d'envers (3b) par l'intermédiaire de couches de liaison (6), par exemple sous la forme de films thermofusibles, (par exemple, en copolyamide CoPA, en polyuréthane thermoplastique TPU, ou en copolyester thermoplastique ou CoPES), de couches de polyuréthane réticulé PUR, appliquée sous forme de colle bien connue par l'homme du métier selon la désignation anglaise « hotmelt ».

Les première et/ou seconde armatures (5a, 5b) sont préférentiellement tissées selon une armure toile, sans que cela ne soit limitatif. Il pourrait tout à fait être envisagé une armure tissée en sergé ou satin.

Les première et/ou seconde armatures tissées (5a, 5b) sont de préférence réalisées à partir de fibres de verre, de fibres de polyamide ou de fibres de polyester.

Les fibres de verre peuvent présenter un titrage compris entre 22 Tex et 68 Tex. Les fibres de polyester peuvent présenter un titrage de l'ordre de 1100 décitex. Les fibres de polyamide peuvent présenter un titrage compris entre 44 décitex et 78 décitex. Les première et/ou seconde armatures tissées (5a, 5b) présentent généralement une épaisseur comprise entre 150 µm et 300 µm, préférentiellement entre 165 µm et 205 µm. Les première et/ou seconde armatures tissées (5a, 5b) présentent généralement une masse surfacique comprise entre 150 et 300 g/m², bien que cette valeur dépende de la nature des fibres utilisées.

Lorsque la première et/ou seconde armatures tissée (5a, 5b) est réalisée à partir de fibre de verre, elle présente un nombre de fils de chaîne compris entre 17 et 18 fils par cm et un nombre de fils de trame compris entre 13,5 et 14 fils par cm.

En dessous de 17 fils de chaîne par cm ou de 13,5 fils de trame par cm, la première et/ou seconde armature tissée (5a, 5b) devient poreuse, notamment avec un titrage compris entre 22 et 68 Tex.

De préférence la première et/ou la seconde armatures tissée (5a, 5b) est imprégnée d'un polymère thermoplastique ou thermodurcissable dans une quantité comprise entre 1 % et 10 % en poids de l'armature tissée imprégnée pour ne pas dégrader la recyclabilité, obtenir une plus grande rigidité et limiter voire supprimer le traversage de colle susceptible d'encrasser la ligne de lamination au cours du procédé d'assemblage des couches.

Le polymère thermodurcissable ou thermoplastique utilisé pour imprégner la première et/ou la seconde armature tissée peut être choisi dans le groupe comprenant la résine polyuréthane, la résine polyester, la résine phénolique, la résine époxy, le polysulfone, la résine vinylester, la résine époxy-acrylique, et leurs mélanges.

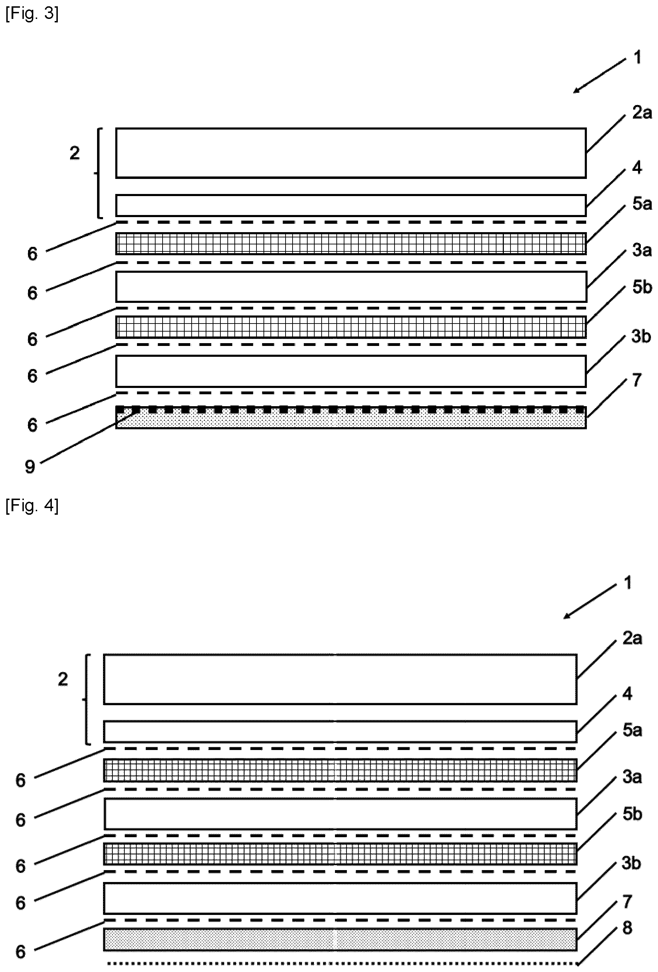

De préférence et en référence aux figures 3 et 4, et pour améliorer la résistance aux phénomènes connus de l'homme du métier sous les termes anglais « telegraphing » et de « buckling » également appelé « waving », une couche moussée (7) est liée à une face inférieure de la couche d'envers (3) par l'intermédiaire d'une couche de liaison (6) sous la forme sous la forme de colle « hotmelt » par exemple en polyuréthane PUR ou copolyester « CoPES ».

La couche moussée (7) présente avantageusement une densité comprise entre 0,15 et 0,25, préférentiellement entre 0,20 et 0,25 et une épaisseur comprise entre 1,5 et 3 mm, préférentiellement entre 1,9 et 2,5 mm, afin d'améliorer la résistance au « telegraphing » et de « buckling » (ou « waving »).

De préférence et en référence à la figure 3, la couche moussée (7) comprend une troisième armature de renfort (9) imprégnée au moins en partie dans son épaisseur de manière à améliorer la résistance de la couche moussée (7) et de l'ensemble de la structure multicouche. La troisième armature de renfort (9) peut être une couche de textile non-tissé, préférentiellement une voile de fibres de verre, de cellulose, ou de polyester seules ou en mélange, une grille de renfort, préférentiellement une grille de fibres de verre ou de polyester, voire un complexe comprenant une couche de textile non-tissé lié à une grille de renfort. La couche de textile non-tissé de la troisième armature de renfort (9) présente généralement un poids compris entre 20 et 80 g/m². La grille de la troisième armature de renfort (9) présente généralement une contexture supérieure à 2 x 2 et un titre de fils de trame et de chaine compris entre 34 et 68 tex. La troisième armature de renfort comprend éventuellement un liant tel que du PVAc (polyvinyle acétate). La couche moussée peut notamment être obtenue à partir d'un plastisol de PVC enduit sur la troisième armature de renfort (9) puis gélifiée de manière à imprégner au moins en partie dans son épaisseur ladite armature. De préférence, la troisième armature de renfort (9) est positionnée au regard de la couche d'envers (3b) est liée à ladite couche d'envers (3b) par une couche de liaison (6).

De préférence et en référence à la figure 4, la structure multicouche (1) comprend sur une face inférieure destinée à être en contact avec le sol, c'est-à-dire par exemple directement la face inférieure la couche d'envers (3), ou bien la face inférieure de la couche textile non-tissé, un adhésif double-face repositionnable (8), c'est-à-dire qui adhère plus à la structure multicouche (1) qu'au sol sur lequel il est posé, pour ainsi faciliter la pose.

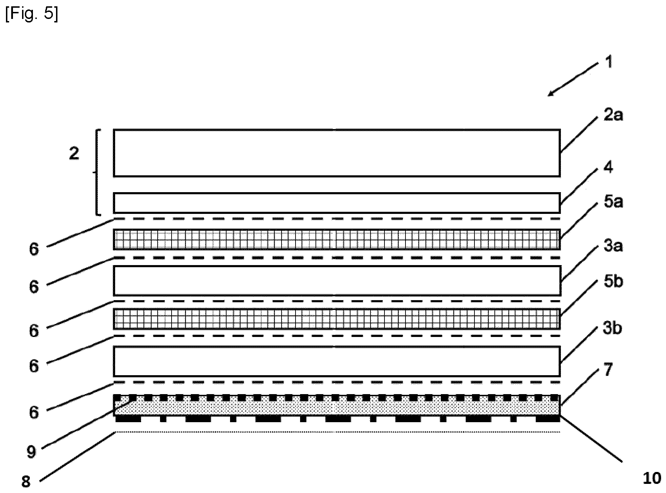

De préférence et en référence à la figure 5, une quatrième armature de renfort (10) est liée sur la face inférieure de la couche moussée (7) et imprégnée au moins en partie dans son épaisseur de manière à améliorer la résistance au télégraphing de l'ensemble de la structure multicouche. La quatrième armature de renfort (9) peut être une couche de textile non-tissé, préférentiellement une voile de fibres de verre, de cellulose, ou de polyester, seules ou en mélange, voire un complexe comprenant une couche de textile non-tissé lié à une grille de renfort, préférentiellement une grille de fibres de verre ou de polyester. La couche de textile non-tissé de la quatrième armature de renfort (10) présente généralement un poids compris entre 80 g/m² et 150 g/m² si elle est seule et entre 20 g/m² et 150 g/m² dans un complexe. Lors de l'utilisation d'un complexe pour la quatrième armature de renfort (10) la grille du complexe présente généralement une contexture supérieure à 2 x 2 et un titre de fils de trame et de chaine compris entre 34 et 68 tex. La quatrième armature de renfort comprend éventuellement un liant tel que du PVAc

(polyvinyle acétate). La couche moussée (7) peut notamment être obtenue à partir d'un plastisol de PVC enduit sur la troisième armature de renfort (9) sur lequel est ensuite déposée la quatrième armature de renfort (10). Le plastisol est ensuite gélifié de manière à imprégner au moins en partie dans leurs épaisseurs les troisième et quatrième armatures (9, 10) de renfort.

Le Demandeur a procédé à des tests sur un produit A conforme à l'invention ;
Le produit A, d'une masse surfacique de 2150 g/m² comprend :
- une couche supérieure (2a) unie en PVC de 0,50 mm d'épaisseur, de 640 g/m² ;
- une couche intercalaire (4) en PVC de 0,50 mm d'épaisseur, de 640 g/m² ;
- une couche de liaison (6) sous la forme d'un film thermofusible d'épaisseur 0,045 mm, de 50g/m² ;
- une première armature tissée (5a) imprégnée d'épaisseur 0,15mm et de 223g/m² ;
- une couche de liaison (6) sous la forme d'une couche de colle polyuréthane réticulée de 35g/m²
- une couche intermédiaire (3a) en PVC plastifié de 8 PCR et 140 µm, de résistance à la flexion mesurée selon la norme ISO 2493-2 de 0,35 mN.m.
- une couche de liaison (6) sous la forme d'une couche de colle polyuréthane réticulée de 35g/m²
- une seconde armature tissée (5b) imprégnée d'épaisseur 0,15mm et de 223g/m² ;
- une couche de liaison (6) sous la forme d'une couche de colle polyuréthane réticulée de 35g/m²
- une couche d'envers (3b) en PVC plastifié de 8 PCR et 140 µm, de résistance à la flexion mesurée selon la norme ISO 2493-2 de 0,35 mN.m.

**[Table 1]**

| **Caractéristiques** | **Normes** | **Exigences** | **Résultats** |
|---|---|---|---|
| Masse surfacique | ISO 2286-2 | 2100 +/-150 g/m² | 2150 g/m² |
| Epaisseur | ISO 2286-3 | < 3,7 mm | 1,75 mm |
| Force de compression - sens long (L) | ISO 604 | > 80 N | 110 N |
| Force de compression - sens transverse (T) | ISO 604 | > 80 N | 90 N |
| E_{f}h³ (≈ moment de flexion) - sens long (L) | ISO 178 | > 1500 N.mm | 1970 N.mm |
| E_{f}h³ (≈ moment de flexion) - sens transverse (T) | ISO 178 | > 1500 N.mm | 1540 N.mm |
| Test vertical d'inflammabilité 12s | FAR 25.853 | conforme | OUI |
| Résistance au pelage (entre les couches de renfort) | ISO 4578 | > 12 N/25mm | 110 N/25mm |
| Recyclabilité | | | OUI |
| Stabilité dimensionnelle (70°C pendant 168h) | ISO 23999 | +/- 0,2% | 0,05% |
| Incurvation à la chaleur (70°C pendant 168h) | ISO 23999 | < 10 mm | 1 mm |
| Résistance au pelage entre l'envers (3b) du produit et un 'adhésif double-face commercialisé par la société 3M sous la référence 3M950 | ISO 4578 | > 20 N/25mm | 30 N/25mm |

Dans ce tableau 1 nous constatons que le produit A répond à toutes les exigences en termes de masse surfacique, épaisseur, force de compression et moment de flexion, inflammabilité et résistance au pelage. D'autre part, la recyclabilité est améliorée par rapport à des solutions existantes. Les caractéristiques de stabilité dimensionnelle, incurvation et tenue sur le support (résistance au pelage) sont également satisfaisantes.

Une seconde série de test est réalisée sur un produit B. Le produit B est conforme à l'invention et reprend les caractéristiques et différentes couches du produit A en y ajoutant une couche moussée (7) liée à la couche d'envers (3b) par l'intermédiaire d'une couche de liaison (6) sous la forme d'une couche de colle polyuréthane réticulée de 35g/m², selon la figure 4. La couche moussée (7) comprend une troisième armature de renfort (9) de 150 µm d'épaisseur partiellement imprégnée dans son épaisseur et sous la forme d'un complexe comprenant une couche de textile non-tissé en fibre de cellulose et polyester d'un poids de 20g/m² lié à une grille de renfort en fil de verre par un liant PVAc, la grille présentant une contexture de 5 x 3 et un titre des fils de trame et de chaine de 34 tex par 34tex. La couche moussée est obtenue à partir d'un plastisol de PVC enduit sur la troisième armature de renfort (9) puis gélifiée de manière à imprégner au moins en partie dans son épaisseur ladite armature. Différents types de couches moussées (7) sont testées en faisant varier leurs densités, masses surfaciques et épaisseurs. Le test de résistance au télégraphing consiste à observer visuellement l'apparition de défaut du support à la surface de la structure multicouche (1). Les résultats sont classés entre : pas de défaut apparent (+++), défaut apparent mais acceptable (++), défaut apparent et inacceptable (+). Le test de résistance au buckling consiste à observer visuellement l'apparition de bosse à la surface de la structure multicouche (1). Les résultats sont classés entre : pas de bosse apparente (+++), bosse apparente mais acceptable (++), bosse apparente inacceptable (+).

**[Table 2]**

| Couche moussée (7) | | | Telegraphing | Buckling | Poinçonnement (NF EN ISO 24343-1) |
|---|---|---|---|---|---|
| Densité | masse surfacique (g/m²) | épaisseur (mm) | | | |
| 0,17 | 400 | 2,4 | +++ | ++ | 0,7 mm |
| 0,17 | 350 | 2 | ++ | ++ | 0,5 mm |
| 0,23 | 400 | 1,75 | + | ++ | 0,2 mm |
| 0,23 | 450 | 1,95 | ++ | ++ | 0,2 mm |
| 0,23 | 500 | 2,2 | ++ | ++ | 0,3 mm |

Dans ce tableau 2, nous constatons qu'une couche moussée (7) de densité comprise entre 0,20 et 0, 35 et d'épaisseur comprise entre 1,9 et 2,5 permet d'obtenir un meilleur compromis entre la résistance au poinçonnement de la structure multicouche (1) et sa résistance au télégraphing et buckling. Cette solution est donc préférable.

Une troisième série de test est réalisée sur deux variantes d'un produit C. Le produit C est conforme à l'invention et reprend les caractéristiques et différentes couches du produit B en y ajoutant une quatrième armature de renfort (10) liée sur la face inférieure de la couche moussée (7) et imprégnée en partie dans son épaisseur ainsi qu'une couche d'adhésif double-face repositionnable (8) liée à la face inférieure de la quatrième armature de renfort (10). Différents renforts sont testés, en comparaison avec un produit B sur lequel est également lié une couche d'adhésif double-face repositionnable (8) liée à la face inférieure de la couche moussée (7).

La couche moussée (7) de ces deux produits dans cette troisième série de test est obtenue à partir d'un plastisol de PVC enduit de densité 0,23, d'une masse surfacique de 450g/m² et d'épaisseur de 2mm.

La quatrième armature de renfort (10) est soit un complexe soit un non-tissé.

Dans une première variante du produit C, le complexe comprend une couche de textile non-tissé en fibre de cellulose et polyester d'un poids de 20g/m² lié à une grille de renfort en fil de verre par un liant PVAc (Polyacétate de vinyle), la grille présentant une contexture de 5 x 3 et un titre des fils de trame et de chaine de 34 tex par 34 tex.

Dans une seconde variante du produit C, le non-tissé est obtenu à partir de polyester et présente une masse surfacique de 80g/m².

Un test de repositionnabilité selon la norme Boeing BMS 8-434 8.11 est effectué pour un même adhésif double face (8). L'objectif est d'obtenir une valeur de résistance au pelage supérieure à 1,5 lb/2 inch.

**[Table 3]**

| | Couche de renfort (10) | Test de repositionnabilité selon la norme Boeing BMS 8.434 8.11 (lb/2 inch) | | | |
|---|---|---|---|---|---|
| | | 1^{er} positionnage | 2^{nd} positionnage | 3^{ème} positionnage | 4^{ème} positionnage à 24hr |
| Produit B | non | 2,58 | 2,28 | 2,26 | 2,92 |
| Produit C, 1^{ère} variante | Complexe | 2,36 | 2,46 | 2,27 | 2,87 |
| Produit C, 2^{ème} variante | Non-tissé | 2,22 | 1,95 | 2,05 | 2,66 |

Le test de repositionnabilité montre que l'ajout d'une quatrième couche de renfort (10) ne dégrade pas les propriétés de repositionnabilité du produit C.

Un test de résistance au télégraphing est réalisé en comparant la structure multicouche selon l'invention, avec deux produits commerciaux « Batiflex AV135 » et « Batiflex AVM 282 » ne comprenant pas de troisième armature de renfort en combinaison avec une couche moussée (7). Le test consiste à disposer des billes métalliques de diamètre 1, 1.5 et 2 mm ainsi qu'une bande de 0,2mm d'épaisseur entre un support plan et le revêtement de sol adhésivé sur le support. Puis, en exposant le revêtement à un éclairage rasant, une note de 1 à 5 est évaluée pour caractériser la visibilité du la bille ou de la bande en surface du revêtement. Plus la note est élevée plus la bille ou la bande est visible, l'objectif étant de masquer au mieux ces défauts.

**[Table 4]**

| | Couche de renfort (10) | Tests de télégraphing | | | |
|---|---|---|---|---|---|
| | | Bille de 1 mm | Bille de 1,5 mm | Bille de 2 mm | Bande de 0,2 mm |
| Batiflex AV 135 | non | 5 | 5 | 5 | 5 |
| Batiflex AVM 282 | non | 2 | 3 | 4 | 5 |
| Produit B | non | 1 | 2 | 3 | 2 |
| Produit C | Non-tissé | 1 | 2 | 2 | 1 |

Les tests montrent une amélioration de l'invention à la résistance au télégraphing en comparaison avec les revêtements de sol pour panneaux de planchers d'avion Batiflex AV135 et AVM282. Les billes de 1 mm sont entièrement masquées et les défauts en surface des autres objets sont largement atténués.

Un test de trolley selon la norme Boeing BMS 8.434 8.2, est effectué entre le produit B et la 2ème variante du produit C comprenant une quatrième armature de renfort (10) non tissé de 80g/m² en polyester. L'objectif est de ne pas observer de délamination de la structure multicouche (1), notamment de la couche de mousse (7) après 20000 cycles de trolley. Ce test montre un début de délamination pour le produit B après 20000 cycles alors que le produit C ne présente aucune délamination. La présence d'une quatrième armature de renfort (10) améliore ainsi la résistance à la délamination d'une structure selon l'invention comprenant une couche de mousse (7).

## Revendications

1. Structure multicouche (1) pour la réalisation d'un revêtement de sol, comprenant au moins une couche de surface (2) liée à une couche d'envers (3b), la couche de surface (2) et la couche d'envers (3b) étant réalisées à partir de PVC ;
***caractérisée en ce que*** la structure multicouche (1) comprend successivement et du haut vers le bas, entre la couche de surface (2) et la couche d'envers (3b), une première armature tissée (5a), une couche intermédiaire (3a), une seconde armature tissée (5b), liées entre elles, à la couche de surface (2) et à la couche d'envers (3b) par l'intermédiaire de couches de liaison (6) sous la forme de films thermofusibles, par exemple en copolyamide ou copolyester, ou de couches de colle polyuréthane réticulée;
**et en ce que la** structure multicouche (1) comprend une masse surfacique comprise entre 2000 et 3000 g/m²,
***et en ce que*** la couche intermédiaire (3a) et la couche d'envers (3b) sont réalisées à partir de PVC et comprennent chacune :
- une épaisseur comprise entre 100 µm et 200 µm ;
- entre 5 et 25 PCR de plastifiant, préférentiellement entre 6 et 15 PCR de plastifiant.

2. Structure multicouche (1) selon la revendication 1, ***caractérisée* en ce que** la couche intermédiaire (3a) et/ou la couche d'envers (3b) comprennent une résistance à la flexion mesurée selon la norme ISO 2493-2 comprise entre 0,30 mN.m et 1,5 mN.m.

3. Structure multicouche (1) selon l'une des revendications précédentes, ***caractérisée* en ce que** la couche de surface (2) comprend une couche supérieure (2a) et une ou plusieurs couches intercalaires (4) en PVC plastifié.

4. Structure multicouche (1) selon la revendication 3, ***caractérisée* en ce que** la couche supérieure (2a) est transparente et la couche intercalaire (4) qui est directement disposée sous la couche supérieure (2a) est un film imprimé d'un décor.

5. Structure multicouche (1) selon l'une des revendications précédentes, ***caractérisée* en ce que** la première armature tissée (5a) et/ou la seconde armature tissée (5b) sont imprégnées d'un polymère thermoplastique ou thermodurcissable dans une quantité comprise entre 1 % et 10 % en poids de l'armature tissée imprégnée.

6. Structure multicouche (1) selon l'une des revendications précédentes, ***caractérisée* en ce qu'**une couche moussée (7) préférentiellement réalisée à partir de PVC est liée à une face inférieure de la couche d'envers (3b) par l'intermédiaire d'une couche de liaison (6) sous la forme de films thermofusibles ou de couche de colle polyuréthane réticulée.

7. Structure multicouche (1) selon la revendication 6, ***caractérisée* en ce que** la couche moussée (7) présente une densité comprise entre 0,15 et 0,25, préférentiellement entre 0,20 et 0,25 et une épaisseur comprise entre 1,5 et 3 mm, préférentiellement entre 1,9 et 2,5 mm.

8. Structure multicouche (1) selon la revendication 6, ***caractérisée* en ce que** la couche moussée (7) comprend une troisième armature de renfort (9) imprégnée au moins en partie dans son épaisseur.

9. Structure multicouche (1) selon la revendication 6, **caractérisée en ce que** la couche moussée (7) comprend une quatrième armature de renfort (10) imprégnée au moins en partie dans son épaisseur.

10. Structure multicouche (1) selon l'une des revendications précédentes, ***caractérisée* en ce qu'**elle comprend sur une face inférieure destinée à être en regard du sol, une couche d'adhésif double-face repositionnable (8).

## Patentansprüche

1. Mehrschichtstruktur (1) zur Herstellung eines Bodenbelags, umfassend mindestens eine Oberflächenschicht (2), die mit einer Rückseitenschicht (3b) verbunden ist, wobei sowohl die Oberflächenschicht (2) als auch die Rückseitenschicht (3b) aus PVC bestehen;
***dadurch gekennzeichnet,* dass** die Mehrschichtstruktur (1) von oben nach unten zwischen der Oberflächenschicht (2) und der Rückseitenschicht (3b) nacheinander eine erste gewebte Verstärkung (5a), eine Zwischenschicht (3a) und eine zweite gewebte Verstärkung (5b) aufweist, die alle untereinander sowie mit der Oberflächenschicht (2) und der Rückseitenschicht (3b) mittels Haftschichten (6) in Form von thermofusiblen Folien, beispielsweise Copolyamid- oder Copolyesterfolien, oder von vernetzten Polyurethan-Klebeschichten verbunden sind;
***und dadurch gekennzeichnet,* dass** die Mehrschichtstruktur (1) eine Flächenmasse zwischen 2000 und 3000 g/m² aufweist;
***und dadurch gekennzeichnet,* dass** die Zwischenschicht (3a) und die Rückseitenschicht (3b) aus PVC bestehen und jeweils aufweisen:
- eine Dicke zwischen 100 µm und 200 µm;
- zwischen 5 und 25 phr Weichmacher, vorzugsweise zwischen 6 und 15 phr Weichmacher.

2. Mehrschichtstruktur (1) nach Anspruch 1, ***dadurch gekennzeichnet,* dass** die Zwischenschicht (3a) und/oder die Rückseitenschicht (3b) einen nach ISO 2493-2 gemessenen Biegewiderstand zwischen 0,30 mN·m und 1,5 mN·m aufweisen.

3. Mehrschichtstruktur (1) nach einem der vorhergehenden Ansprüche, ***dadurch gekennzeichnet,* dass** die Oberflächenschicht (2) eine Deckschicht (2a) und eine oder mehrere Zwischenschichten (4) aus weichgemachtem PVC umfasst.

4. Mehrschichtstruktur (1) nach Anspruch 3, ***dadurch gekennzeichnet,* dass** die Deckschicht (2a) transparent ist und die unmittelbar unter der Deckschicht (2a) angeordnete Zwischenschicht (4) eine mit einem Muster bedruckte Folie ist.

5. Mehrschichtstruktur (1) nach einem der vorhergehenden Ansprüche, ***dadurch gekennzeichnet,* dass** die erste gewebte Verstärkung (5a) und/oder die zweite gewebte Verstärkung (5b) mit einem thermoplastischen oder duroplastischen Polymer in einer Menge zwischen 1 % und 10 Gew.-% der imprägnierten gewebten Verstärkung imprägniert sind.

6. Mehrschichtstruktur (1) nach einem der vorhergehenden Ansprüche, ***dadurch gekennzeichnet,* dass** eine vorzugsweise aus PVC bestehende Schaumschicht (7) mittels einer Haftschicht (6) in Form von thermofusiblen Folien oder einer vernetzten Polyurethan-Klebeschicht an einer unteren Fläche der Rückseitenschicht (3b) befestigt ist.

7. Mehrschichtstruktur (1) nach Anspruch 6, ***dadurch gekennzeichnet,* dass** die Schaumschicht (7) eine Dichte zwischen 0,15 und 0,25, vorzugsweise zwischen 0,20 und 0,25, sowie eine Dicke zwischen 1,5 und 3 mm, vorzugsweise zwischen 1,9 und 2,5 mm, aufweist.

8. Mehrschichtstruktur (1) nach Anspruch 6, ***dadurch gekennzeichnet,* dass** die Schaumschicht (7) eine dritte Verstärkung (9) umfasst, die zumindest teilweise über ihre Dicke hinweg imprägniert ist.

9. Mehrschichtstruktur (1) nach Anspruch 6, ***dadurch gekennzeichnet,* dass** die Schaumschicht (7) eine vierte Verstärkung (10) umfasst, die zumindest teilweise über ihre Dicke hinweg imprägniert ist.

10. Mehrschichtstruktur (1) nach einem der vorhergehenden Ansprüche, ***dadurch gekennzeichnet,* dass** sie an einer unteren, zum Kontakt mit dem Boden vorgesehenen Fläche eine repositionierbare doppelseitige Klebeschicht (8) aufweist.

## Claims

1. Multilayer structure (1) for creating a floor covering, comprising at least one surface layer (2) bonded to a backing layer (3b), both the surface layer (2) and the backing layer (3b) being made of PVC;
***characterized in that*** the multilayer structure (1) successively includes, from top to bottom, between the surface layer (2) and the backing layer (3b), a first woven reinforcement (5a), an intermediate layer (3a), a second woven reinforcement (5b), all bonded to each other, to the surface layer (2), and to the backing layer (3b) by means of bonding layers (6) in the form of thermofusible films, for example, copolyamide or copolyester, or cross-linked polyurethane adhesive layers;
***and in that*** the multilayer structure (1) has a surface mass between 2000 and 3000 g/m²,
***and in that*** the intermediate layer (3a) and the backing layer (3b) are made of PVC and each include:
- a thickness between 100 µm and 200 µm;
- between 5 and 25 phr of plasticizer, preferably between 6 and 15 phr of plasticizer.

2. Multilayer structure (1) according to claim 1*, **characterized in that*** the intermediate layer (3a) and/or the backing layer (3b) include a flexural resistance measured according to ISO 2493-2 between 0.30 mN.m and 1.5 mN.m.

3. Multilayer structure (1) according to one of the previous claims, ***characterized in that*** the surface layer (2) includes a top layer (2a) and one or more interlayers (4) made of plasticized PVC.

4. Multilayer structure (1) according to claim 3, ***characterized in that*** the top layer (2a) is transparent and the interlayer (4) directly placed under the top layer (2a) is a film printed with a design.

5. Multilayer structure (1) according to one of the previous claims, ***characterized in that*** the first woven reinforcement (5a) and/or the second woven reinforcement (5b) are impregnated with a thermoplastic or thermosetting polymer in an amount between 1% and 10% by weight of the impregnated woven reinforcement.

6. Multilayer structure (1) according to one of the previous claims, ***characterized in that*** a foamed layer (7) preferably made of PVC is bonded to a lower face of the backing layer (3b) by means of a bonding layer (6) in the form of thermofusible films or cross-linked polyurethane adhesive layer.

7. Multilayer structure (1) according to claim 6, ***characterized in that*** the foamed layer (7) has a density between 0.15 and 0.25, preferably between 0.20 and 0.25, and a thickness between 1.5 and 3 mm, preferably between 1.9 and 2.5 mm.

8. Multilayer structure (1) according to claim 6, ***characterized in that*** the foamed layer (7) includes a third reinforcement (9) impregnated at least partially in its thickness.

9. Multilayer structure (1) according to claim 6, ***characterized in that*** the foamed layer (7) includes a fourth reinforcement (10) impregnated at least partially in its thickness.

10. Multilayer structure (1) according to one of the previous claims, ***characterized in that*** it includes on a lower face intended to be in contact with the floor, a repositionable double-sided adhesive layer (8).
